Europäisches Patentamt

European Patent Office

Office européen des brevets

(11) Veröffentlichungsnummer: **0 356 682**
**A2**

## (12) EUROPÄISCHE PATENTANMELDUNG

(21) Anmeldenummer: **89113123.7**

(51) Int. Cl.5: **G01N 27/12**

(22) Anmeldetag: **18.07.89**

(30) Priorität: **31.08.88 DE 3829517**

(43) Veröffentlichungstag der Anmeldung:
**07.03.90 Patentblatt 90/10**

(84) Benannte Vertragsstaaten:
**DE ES FR GB IT SE**

(71) Anmelder: **ROBERT BOSCH GMBH**
**Postfach 10 60 50**
**D-7000 Stuttgart 10(DE)**

(72) Erfinder: **Gruenwald, Werner, Dipl.-Phys.**
**Rob.-Schumannstrasse 21**
**D-7016 Gerlingen(DE)**
Erfinder: **Nolting, Peter, Dipl.-Ing.**
**Scheffelweg 24**
**D-7582 Bühlertal(DE)**

(54) **Feuchtesensor.**

(57) Bei einem Sensor (10) zur Bestimmung der Feuchte ist auf einem Träger (11) aus schlecht wärmeleitendem Material ein Heizer (12), eine elektrische Isolierschicht (13) und eine feuchtempfindliche Schicht (14) in Dickschicht- und/oder Dünnschichttechnik aufgebracht. Der Heizer (12) erhöht die Temperatur in der Umgebung der Schicht (14) über die Umgebungstemperatur. Dadurch kann der Sensor (10) immer vom trockenen Zustand in den feuchten Zustand messen. Der Sensor (10) baut relativ klein und einfach und hat eine besonders kurze Einstellzeit.

FIG. 1

EP 0 356 682 A2

## Feuchtesensor

### Stand der Technik

Die Erfindung geht aus von einem Feuchtesensor nach der Gattung des Anspruchs 1. Bei einem derartigen bekannten Feuchtesensor ist die feuchteempfindliche Schicht in Dickschichttechnik auf einen Träger aufgedruckt. Für eine schnelle und genaue Messung ist aber die lange Einstellzeit beim Übergang von feuchter zu trockener Atmosphäre (Desorption) hinderlich. Ferner ergeben sich Hystereseeffekte, und die Messung der relativen Feuchte beginnt jeweils bei unterschiedlichen Feuchtegraden.

### Vorteile der Erfindung

Der erfindungsgemäße Feuchtesensor mit den kennzeichnenden Merkmalen des Hauptanspruchs hat demgegenüber den Vorteil, daß er schnell und kostengünstig die Feuchte eines Raums erfaßt. Durch ein kurzzeitiges Aufheizen des Feuchtesensors über die Umgebungstemperatur kann die Einstellzeit beschleunigt werden. Insbesondere bei Betrieb des Sensors in bewegter Luft ergeben sich schnelle und genaue Meßwerte. Der Aufheizprozeß kann zyklisch in kurzen Zeitabständen wiederholt werden. Alle Meßvorgänge werden somit in der gleichen Weise von trockener Atmosphäre in Richtung feuchter Atmosphäre vorgenommen. Die Meß genauigkeit wird verbessert. Durch die Herstellung des Feuchtesensors in Dickschichttechnik kann die feuchteempfindliche Schicht und die Heizschicht relativ nahe beieinander angeordnet werden, so daß eine schnelle Aufheizung und kontrollierte Abkühlung sowie eine gleichmäßige Temperaturverteilung über die feuchteempfindliche Schicht möglich ist. Außerdem kann in einer besonderen Betriebsart der Widerstand der Heizung nach dem Abschalten der Heizspannung als Temperatursignal ausgewertet werden. Dadurch läßt sich der optimale Zeitpunkt der Feuchtemessung bestimmen oder eine gegebenenfalls erforderliche Temperaturkompensation für den Feuchtesensor realisieren.

Durch die in den Unteransprüchen aufgeführten Maßnahmen sind vorteilhafte Weiterbildungen des im Hauptanspruch angegebenen Feuchtesensors möglich.

### Zeichnung

Ein Ausführungsbeispiel der Erfindung ist in der Zeichnung dargestellt und in der nachfolgenden Beschreibung näher erläutert. Es zeigen

Figur 1 einen Feuchtesensor und
Figur 2 ein Meßdiagramm.

### Beschreibung des Ausführungsbeispiels

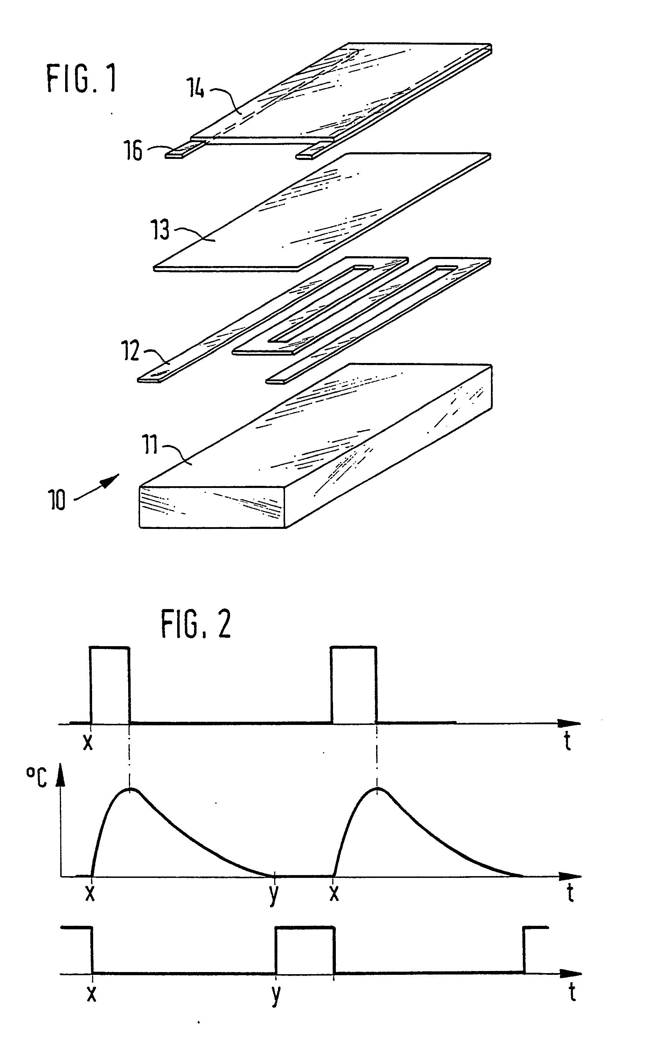

In Figur 1 ist mit 10 ein Feuchtesensor bezeichnet, der eine dünne Trägerplatte 11 aus schlecht wärmeleitendem, temperatur- und feuchtebeständigen und für die Drucktechniken geeignetes Material aufweist. Als solches Material eignet sich besonders vorteilhaft ein Keramiksubstrat, z.B. aus Aluminiumoxid. Die Trägerplatte 11 ist quaderförmig dargestellt, kann aber nahezu jede, den jeweiligen Einbauverhältnissen angepaßte Form aufweisen. Auf der Oberseite, d.h. auf der dem Raum, dessen Feuchte bestimmt werden soll, zugewandten Seite, ist ein mäanderförmig ausgebildeter Heizleiter 12 aufgedruckt. Hierzu kann sowohl die allgemein bekannte Dickschicht- als auch die Dünnschichttechnik verwendet werden. Der Heizleiter 12 wird von einer elektrischen, aufgedruckten Isolationsschicht 13, z.B. aus Glas, bedeckt. Sie dient gleichzeitig auch als Träger für eine feuchteempfindliche Schicht 14. Hierzu sind verschiedene feuchteabhängige Widerstände verwendbar. Z.B. kann ein Widerstand aus dem Stoffgemisch $Cr_2O_3$, $V_2O_5$ und $Na_2WO_4$ mit dem Gewichtsverhältnis 2:1:1 bestehen. Über Kontaktbahnen 16 ist die Schicht 14 mit einer nicht dargestellten Auswerteschaltung oder einer elektrischen Stromversorgung verbindbar.

Alle Schichten 12 bis 14 werden in der Dickschicht- oder Dünnschichttechnik in der oben aufgeführten Reihenfolge auf der Trägerplatte 11 aufgebracht. Es ist aber auch möglich, die beiden Drucktechniken Dickschicht- oder Dünnschichttechnik miteinander bei einem Feuchtesensor 10 zu kombinieren, so daß auf der Trägerplatte die jeweiligen Schichten mit unterschiedlicher Technik aufgebracht werden können.

Die Isolierschicht 13 soll möglichst nicht als thermische Isolierung wirken. Durch den schichtartigen Aufbau des erfindungsgemäßen beheizten Feuchtesensors 10 ist der Heizer 12 und die feuchteempfindliche Schicht 14 so nahe beieinander anordbar, daß keine zeitlich verzögerte Messung entsteht.

Um die Richtwirkung des Feuchtesensors 10 zu messen, d.h. in welcher Richtung er empfindlich ist, ist auf der Unterseite der Trägerplatte 11 eine wärmereflektierende und/oder isolierende Schicht ebenfalls in Drucktechnik aufgebracht. Um diesen Effekt noch zu verstärken, kann auf der Rückseite eine zusätzliche Heizschicht angeordnet sein. Auch ist es möglich, mehr als einen Heizer bzw. eine feuchteempfindliche Schicht anzuordnen.

Im Diagramm nach Figur 2 ist die Wirkungsweise des Feuchtesensors 10 dargestellt. Bei einem bestimmten Zeitpunkt x wird der Sensor 12 eingeschaltet. Während seiner Betriebszeit steigt die Temperatur in der Umgebung der Schicht 14 über die Umgebungstemperatur an. Dadurch befindet sich der Feuchtefühler bzw. seine Schicht 14 im trockenen Zustand. Nach Abschalten des Heizers 12 sinkt die Temperatur in der Umgebung der Schicht 14 von ihrem Höchstwert wieder auf die Umgebungstemperatur ab. Zu diesem Zeitpunkt y wird der eigentliche Meßvorgang für die Feuchtebestimmung gestartet. Dieser Prozeß, Aufheizen, Abkühlen und Messen kann zyklisch in kurzen Zeitabständen wiederholt werden. Jeder Meßvorgang wird immer in der gleichen Weise vom trockenen Zustand in Richtung feuchter Zustand vorgenommen.

Der Widerstand der Heizung kann nach dem Abschalten der Heizspannung in einer besonderen Betriebsart als Temperatursignal ausgewertet werden. Damit kann der optimale Zeitpunkt der Feuchtemessung festgelegt werden bzw. kann bei jeweils gleicher Temperatur und gleichem Zustand der Meßvorgang gestartet werden. Ferner ist eine Temperaturkompensation für den Feuchtesensor möglich. Der Feuchtesensor kann besonders vorteilhaft zur Bestimmung der relativen Feuchte im Fahrgastraum eines Kraftfahrzeugs verwendet werden, um die Klimaanlage zu regeln.

## Ansprüche

1. Sensor (10) zur Bestimmung der relativen Feuchte mit mindestens einer auf einem Träger (11) aus schlecht wärmeleitendem Material in Drucktechnik aufgebrachten feuchteempfindlichen Schicht (14), dadurch gekennzeichnet, daß der Sensor (10) mindestens einen Heizer (12) aufweist.

2. Sensor nach Anspruch 1, dadurch gekennzeichnet, daß der Sensor (10) schichtartig aufgebaut ist und die Schicht (14) und der Heizer (12) durch eine elektrische Isolierschicht (13) getrennt sind.

3. Sensor nach Anspruch 1 und/oder 2, dadurch gekennzeichnet, daß der oder die Heizer (12) mäanderförmig ausgebildet sind.

4. Sensor nach einem der Ansprüche 1 bis 3, dadurch gekennzeichnet, daß der Träger (11) aus Keramiksubstrat, z.B. Aluminiumoxid besteht.

5. Sensor nach einem der Ansprüche 1 bis 4, dadurch gekennzeichnet, daß auf der Rückseite des Trägers (11) eine wärmereflektierende und/oder isolierende Schicht aufgebracht ist.

6. Sensor nach einem der Ansprüche 1 bis 5, dadurch gekennzeichnet, daß sich auf der Rückseite des Trägers (11) ein zweiter Heizer befindet.

7. Sensor nach einem der Ansprüche 1 bis 6, dadurch gekennzeichnet, daß die feuchteempfindliche Schicht (14) aus einem Stoffgemisch aus $Cr_2O_3$, $V_2O_5$ und $Na_2WO_4$ im Gewichtsverhältnis 1,5 bis 3,0:1:1 besteht.

8. Sensor nach einem der Ansprüche 1 bis 7, dadurch gekennzeichnet, daß der Sensor im Fahrgastraum eines Kraftfahrzeugs angeordnet ist.

FIG. 1

14

16

13

12

11

10

FIG. 2

°C

x

x     y     x

t

x     y     x     t

x     y     t